(19) Europäisches Patentamt / European Patent Office / Office européen des brevets

(11) EP 2 136 210 B1

(12) **EUROPEAN PATENT SPECIFICATION**

(45) Date of publication and mention of the grant of the patent:
**15.08.2018 Bulletin 2018/33**

(51) Int Cl.:
*G01N 33/48* (2006.01)    *B01L 7/00* (2006.01)
*B01F 11/00* (2006.01)    *B01L 3/00* (2006.01)
*G01N 21/03* (2006.01)    *G01N 35/10* (2006.01)
*G01N 35/00* (2006.01)    *G01N 35/04* (2006.01)
*G01N 21/59* (2006.01)

(21) Application number: **09007212.5**

(22) Date of filing: **29.05.2009**

(54) **Body fluid sample analyzer**

Analysegerät für Körperflüssigkeitsproben

Analyseur d'échantillon de fluide corporel

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **18.06.2008 JP 2008159182**
**18.06.2008 JP 2008158979**

(43) Date of publication of application:
**23.12.2009 Bulletin 2009/52**

(73) Proprietor: **Horiba, Ltd.**
**Kyoto-shi, Kyoto 601-8510 (JP)**

(72) Inventors:
• **Shindo, Takaaki**
**Kyoto-city**
**Kyoto 601-8510 (JP)**

• **Oue, Soichi**
**Kyoto-city**
**Kyoto 601-8510 (JP)**
• **Ikeda, Motohide**
**Kyoto-city**
**Kyoto 601-8510 (JP)**

(74) Representative: **Müller Hoffmann & Partner**
**Patentanwälte mbB**
**St.-Martin-Strasse 58**
**81541 München (DE)**

(56) References cited:
**JP-A- 2008 032 624      US-A- 4 265 544**
**US-A- 5 646 046        US-A- 5 911 000**
**US-A1- 2008 025 872**

## Description

## FIELD OF THE INVENTION

This invention relates to a body fluid sample analyzer that analyzes a body fluid sample based on an optical transparency of the reaction liquid reacted by mixing the body fluid sample such as a blood with a reagent.

## BACKGROUND ART

Conventionally, a body fluid such as a blood has been widely analyzed for medical diagnosis. For example, as a device to measure a concentration of a C-reactive protein (CRP) contained in a blood, the patent document 1 discloses a device for measuring a degree of agglutination by means of the optical transmission by mixing a predetermined reagent with the blood sample so as to produce the CRP agglutination due to an immune reaction.

This device is so arranged that a blood sample collected by a sampling nozzle and a reagent are injected to a reaction cell so as to generate the immune reaction, a fixed volume injection unit for transporting a liquid is connected to the reaction cell through a transparent tube having a small diameter, the fixed volume injection unit is driven reciprocally and the blood sample and the reagent in the reaction cell is taken in and out from the tube so that the immune reaction is promoted by agitating the blood sample and the reagent in the reaction cell. After agitating the blood sample and the reagent, the reaction liquid is transported to an optical measurement section in a shape of a hollow cuboid arranged in a mid-course of the tube, and the optical transparency of the reaction liquid is measured so that a concentration of the C-reactive protein (CRP) is measured.

Patent document 1: Japan patent laid open number 11-295303
Patent document 2: Japan patent laid open number 2004-333439

## DISCLOSURE OF THE INVENTION

## PROBLEMS TO BE SOLVED BY THE INVENTION

However, with the above-mentioned arrangement, since the optical measurement section and the reaction cell are separately arranged, and the liquid is taken in and out between the optical measurement section and the reaction cell, air bubbles easily reside in the optical measurement section and the liquid fluctuates due to the air bubbles so that an adverse effect might be exerted on the measurement accuracy. In addition, with this arrangement, since the flow channel of the optical measurement section becomes complicated, a problem might be occurred at a time of cleaning the flow channel.

Conventionally, with this kind of the body fluid sample analyzer, the reagent is stored at a low temperature until just before the reagent is supplied for reaction in consideration of the stability of the reagent and the reagent is heated in the sampling nozzle and then injected to the reaction cell. However, since this kind of the body fluid sample analyzer requires the reagent be agitated in the reaction cell after applying the heat, it takes a long time to conduct the measurement.

In addition, conventionally, there are several method for detecting a liquid volume in a reagent vessel; a method for detecting whether or not there is a reagent by making use of an optical change of the transmitting light after irradiating the light on the sampling nozzle that has sucked the reagent, a method for detecting whether or not there is a reagent by making use of a resistance value change after energizing the sampling nozzle that has sucked the reagent, and a method for detecting whether or not there is a reagent by making use of a temperature change or a pressure change in the sampling nozzle that has sucked the reagent.

In case of sucking the liquid in the reagent vessel by the use of these methods, the patent document 2 discloses a method for measuring a liquid volume in the reagent vessel by comparing a time period from a time when a distal end of the liquid passes a certain point in the flow channel to a time when a terminal end of the liquid passes the certain point with an estimated time that has been previously obtained.

However, the method described in the patent document 2 has a problem that the liquid volume of the reagent cannot be measured accurately because the liquid passing time varies if a viscosity or a density differs depending on a kind of the liquid.

The liquid volume of the reagent used for analysis largely affects an analysis result. As a result, it is important to verify the liquid volume of the reagent used for analysis and to detect that the reagent runs out also from a viewpoint of securing the analysis accuracy.

Document US 4,265,544 A discloses a liquid agitation apparatus for an absorbance measuring apparatus which comprises a transparent reagent vessel for containing a reaction solution to be examined, a holder for holding the reaction vessel, and means for imparting a mechanical vibration to the holder in order to agitate the reaction solution, contained in the transparent reaction vessel and held by the holder.

Document US 2008/0025872 A1 discloses a disposable fluid sample collection device which is configured to collect a fluid sample by capillary action and to provide the fluid sample to a region for analyzing by using a differential pressure.

Document JP 2008/032624 A discloses an optical measurement apparatus which is capable of automatically removing a measuring cell with a simple constitution by an operation of sucking or exhausting a measurement cell is attached or detached to an optical measurement apparatus.

The present claimed invention intends to solve all of the problems and a main object of this invention is to provide a body fluid sample analyzer that is superior in measurement accuracy and a performance of cleaning with a simple and compact arrangement wherein air bubbles are difficult to reside, and an additional object is to shorten a time required for measurement by heating and agitating the reagent at once. Also disclosed herein is a liquid suction unit that can measure the liquid volume of the reagent in a vessel with accuracy.

**MEANS TO SOLVE THE PROBLEMS**

The objects underlying the present invention are achieved by a body fluid sample analyzer according to independent claim 1. Preferred embodiments of the body fluid sample analyzer are defined in the dependent claims.

More specifically, the body fluid sample analyzer in accordance with the claimed invention is a body fluid sample analyzer that analyzes a body fluid sample based on a light transmission characteristics of a reaction liquid produced by reaction of the body fluid sample and the reagent, and is comprising a reaction cell that stands vertically and has an insertion bore for the body fluid sample and the reagent on its upper surface, and a discharge/suction apparatus that is connected to a bottom part of the reaction cell through a tube and that reciprocates and agitates the body fluid sample and the reagent between the reaction cell and the tube by repeating a discharging and sucking movement. An optical measurement device measures a light transmission characteristics of the reaction liquid produced by agitating the body fluid sample and the reagent, wherein the optical measurement device is arranged on the reaction cell. Since the optical measurement device is arranged on the reaction cell having an arrangement to stand vertically and its upper surface opens so that air bubbles are difficult to reside, it is possible to largely reduce an adverse effect from the air bubbles on the measurement accuracy. In addition, since the optical measurement device is arranged on the reaction cell, the arrangement can be simplified and downsized, eventually enabling to promote improvement of a performance of cleaning and reducing the cost.

In order to prevent the stray light from entering, it is preferable that a cover for shielding the light is arranged in an openable and closable state on the insertion bore.

As a concrete arrangement in the vicinity of the optical measurement device represented is that a part or all of the reaction cell is made of a transparent wall, a light emitting element and a light sensing element constituting the optical measurement device are arranged at portions facing the transparent wall, and the light emitted from the light emitting element can be received by the light sensing element through the transparent reaction cell.

In order to shorten the time required for measurement by heating and agitating the reagent at once, a temperature adjusting block houses the reaction cell in its inside and can adjust a temperature. Furthermore, a portion of the tube, where the body fluid sample and the reagent enter due to the reciprocating movements, in the tube extending from the reaction cell is wound around an outer surface of the temperature adjusting block.

In order to make it easy to wind the heating device around the temperature adjusting block, to make a number of winding the tube constant, and to prevent misalignment of the wound tube, it is preferable that a circumferential groove whose depth is equal to an outer diameter of the tube or deeper than the outer diameter is arranged on the outer surface of the temperature adjusting block and the tube is held by the circumferential groove by winding the tube around the circumferential groove.

As a preferable arrangement to mount the light emitting element and the light sensing element represented is that optical transmitting bores are arranged at portions facing each other on the temperature adjusting block, and a mounting member for fixing the light emitting element and the light sensing element on portions each of which faces the optical transmitting bore of the temperature adjusting block is arranged, wherein the mounting member comprises a pair of element holding plates each of which holds the light emitting element and the light sensing element respectively and each of which faces each other and a connecting plate that connects one end of the element holding plate and one end of the other element holding plate, and the mounting member is so arranged to pinch the temperature adjusting block between the element holding plates.

In addition, a liquid suction unit described herein is comprising a flow channel whose one end opens, a liquid sensor arranged in the flow channel, a suction mechanism that sucks a fluid into the flow channel, a driving mechanism that moves vertically at an open end of the flow channel, and a control section that controls the suction mechanism to suck a gas, after sucking a predetermined amount of the fluid from a predetermined vessel into the flow channel, by an amount so that a terminal end portion of the sucked fluid in the flow channel locates at a sensing position in the liquid sensor.

In accordance with this arrangement, since the amount of the air sucked in succession to sucking the reagent by the predetermined amount from the vessel into the flow channel is so set that the terminal end portion of the reagent that has been previously sucked into the flow channel locates at the sensing position in the liquid sensor, it is possible to accurately judge whether or not there is the reagent in the vessel or to judge whether or not the reagent is sampled by an intended amount. As a result, in accordance with this invention, it is possible to verify an accuracy of an amount of the reagent and to detect that the reagent runs out without being affected by a viscosity or a density of the liquid.

The air required for making the terminal end portion of the reagent sucked into the flow channel locates at the sensing position in the liquid sensor may be sucked at once, however, may be separately sucked at several times. As mentioned, if the air is sucked separately at several times, it is also possible to detect that bubbles are mixed into the reagent or to calculate an amount of the sucked reagent by operating the liquid sensor to detect whether or not the reagent locates at the sensing position in the flow channel every time the air is sucked.

Furthermore, also described herein is a method for detecting liquid in a vessel by the use of a liquid suction unit comprising a flow channel whose one end opens, a liquid sensor arranged in the flow channel, a suction mechanism that sucks a fluid into the flow channel, and a driving mechanism that moves vertically at an open end of the flow channel. After a predetermined amount of the fluid is sucked from a predetermined vessel into the flow channel, a gas is sucked by an amount so that a terminal end portion of the sucked fluid in the flow channel locates at a sensing position in the liquid sensor.

## EFFECT OF THE INVENTION

In accordance with the claimed invention, since an adverse effect from the air bubbles on the measurement accuracy can be largely reduced and the arrangement can be simplified and downsized as well, it is possible to improve a performance of cleaning and to promote reducing the cost. In addition it is possible to conduct a measurement of the reagent amount and to detect that the reagent runs out with high accuracy.

## BRIEF DESCRIPTION OF THE DRAWINGS

Fig. 1 is a pattern diagram showing a concentration measurement mechanism of a body fluid sample analyzer in accordance with the claimed invention.
Fig. 2 is a perspective view of a temperature adjusting block viewed from the lower side.
Fig. 3 is a front view of the temperature adjusting block.
Fig. 4 is a side view of the temperature adjusting block.

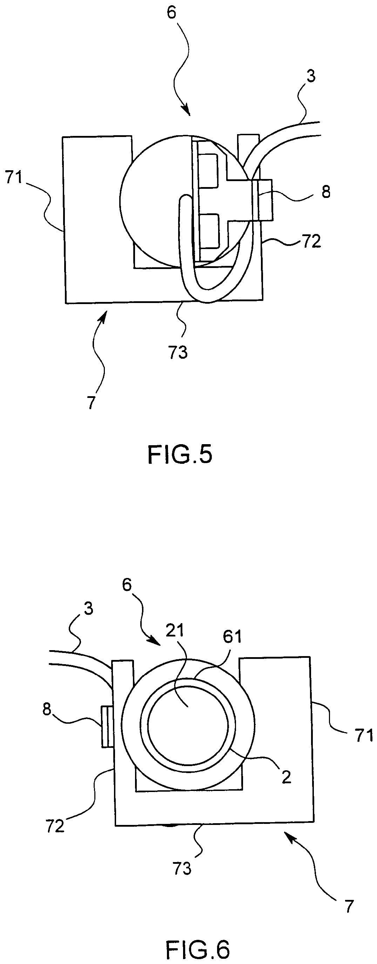

Fig. 5 is a bottom view of the temperature adjusting block.
Fig. 6 is a plane view of the temperature adjusting block.
Fig. 7 is an exploded perspective view of the temperature adjusting block.
Fig. 8 is a structural configuration view of a liquid suction unit.
Fig. 9 is a structural configuration view of the liquid suction unit.
Fig. 10 is a flow chart showing a sensing method.
Fig. 11 is an enlarged view showing a vicinity of a liquid sensor.

## BEST MODES OF EMBODYING THE INVENTION

The claimed invention will be explained with reference to drawings.

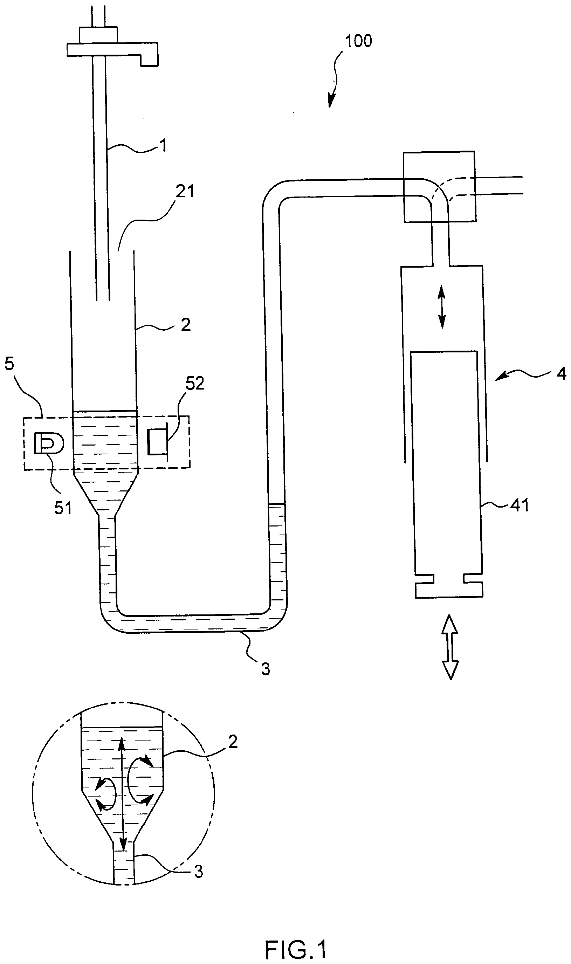

A body fluid sample analyzer in accordance with the invention is to conduct various analyses on human blood (whole blood) as being a body fluid sample, and Fig. 1 shows a pattern diagram of a concentration measuring mechanism 100 that measures a concentration of a C-reactive protein contained in blood.

The concentration measuring mechanism 100 basically comprises a reaction cell 2 that stores a blood sample and a reagent dropped from a sampling nozzle 1 and a fixed volume injection unit 4 as being a discharge/suction apparatus for transporting a liquid that is connected to the reaction cell 2 through a small diameter transparent tube 3. The concentration measuring mechanism 100 agitates the blood sample and the reagent so as to promote an immune reaction thereby to produce a reaction liquid by driving the fixed volume injection unit 4 reciprocably, namely by driving a cylinder 41 back and forth so as to take the blood sample and the reagent in and out between the reaction cell 2 and the tube 3. Then a concentration of the C-reactive protein (CRP) can be measured by measuring an optical transmittance of the reaction liquid by an optical measurement device 5.

In this embodiment, a latex immunity turbidimetric method is used for measuring the C-reactive protein (CRP). More specifically, a hemolytic reagent (hereinafter referred to as R1 reagent), a buffer reagent (hereinafter referred to as R2 reagent) and an antihuman CRP sensitization latex immunity reagent (hereinafter referred to as R3 reagent) are used as the reagent used for this measurement.

Next, each section of the concentration measuring mechanism 100 will be explained.

As shown in Fig. 1, the sampling nozzle 1 moves to a sample vessel or a reagent vessel, not shown in drawings, arranged at the other place, collects the blood sample or the reagent by a previously determined amount, returns to a discharge position directly above the reaction cell 2, and then discharges and drops the collected blood sample or reagent to the reaction cell 2 in a predetermined order.

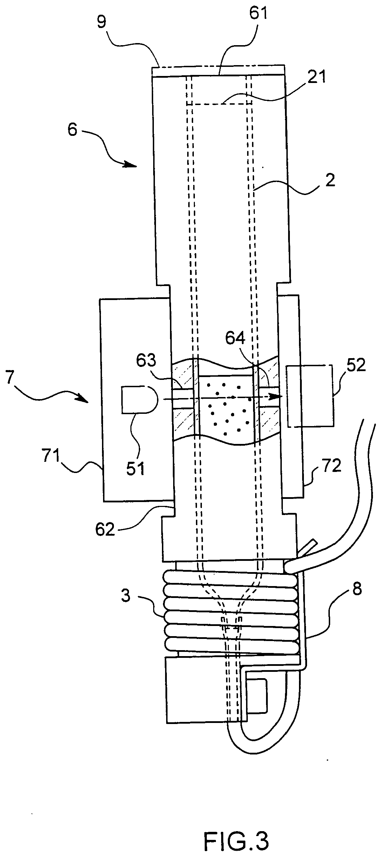

The reaction cell 2 is, as shown in Fig. 1 and Fig. 3, in a vertically standing cylindrical shape formed with a transparent wall made of a glass or the like. An insertion bore 21 is formed to open on the upper surface of the reaction cell 2 and the blood sample and the reagent dropped from the sampling nozzle 1 are stored inside of the reaction cell 2 through the insertion bore 21. In addition, a bottom surface of the reaction cell 2 is tapered so that a center part thereof is formed to be the lowest and the tube 3 is connected to a connection port that opens of the center part.

The reaction cell 2 is, as shown in Fig. 3, housed inside of a temperature adjusting block 6 generally in a cylindrical shape made of a metal. The temperature adjusting block 6 adjusts the temperature to be a constant value (about 37 °C) by winding a heating device (not shown in drawings) such as a sheet heater or a wire heater around the temperature adjusting block 6.

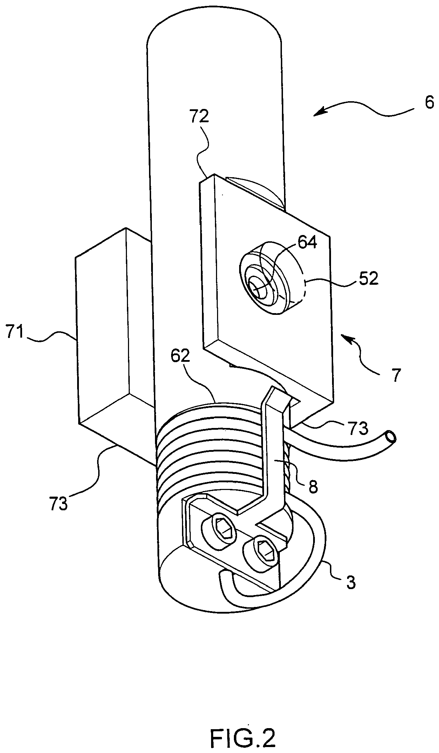

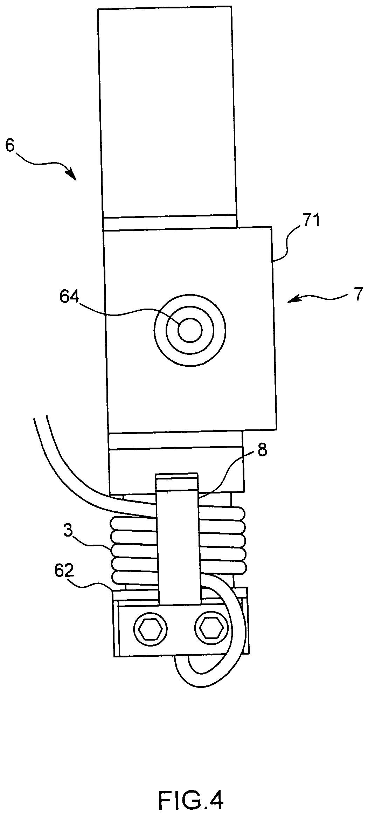

The tube 3 connected to the bottom part of the reaction cell 2 extends, as shown in Fig. 2 - Fig. 4, outside from an end surface of the temperature adjusting block 6, and the extending section winds several times around a circumferential groove 62 arranged on an outer circumferential surface of the one end part of the temperature adjusting block 6.

A depth of the circumferential groove 62 is set to be the same as or larger than an outer diameter of the tube 3 so that the wound tube 3 is set to locate to be flat to the outer circumferential surface of the temperature adjusting block 6 or lower than the outer circumferential surface thereof. This is intended to facilitate the heating device winding around the temperature adjusting block 6. In addition, the circumferential groove 62 makes a number of winding the tube 3 constant, and also contributes to prevention of misalignment of the wound tube 3 in an axial direction of the temperature adjusting block 6. The number of winding of the tube 3, namely, a length that the tube 3 makes contact with the temperature adjusting block 6 is determined based on the terminal end position where the blood sample and the reagent (or the reaction liquid) enter due to a movement of the fixed volume injection unit 4 for agitation. An end where the tube 3 makes contact with the temperature adjusting block 6 locates at a side of the fixed volume injection unit 4 nearer than the terminal end position. In addition, the end where the tube 3 makes contact with the temperature adjusting block 6 may locate at the same position as the terminal end position, or nearer the temperature adjusting block 6 than the terminal end position.

The reference code 8 in Fig. 2 denotes a holding member to guarantee the tube 3 to securely make contact with the temperature adjusting block 6 by preventing the tube 3 from being loosened. The holding member 8 is formed by making use of a flat plate material arranged to cross the circumferential groove 62 along the axial direction of the temperature adjusting block 6.

The other end surface of the temperature adjusting block 6 opens to form an aperture 61, and the aperture 61 is connected to the insertion bore 21 of the reaction cell 2 and a cover 9 (refer to Fig. 3) for blocking the light is mounted on the temperature adjusting block 6 to open or close the insertion bore 21 of the reaction cell 2.

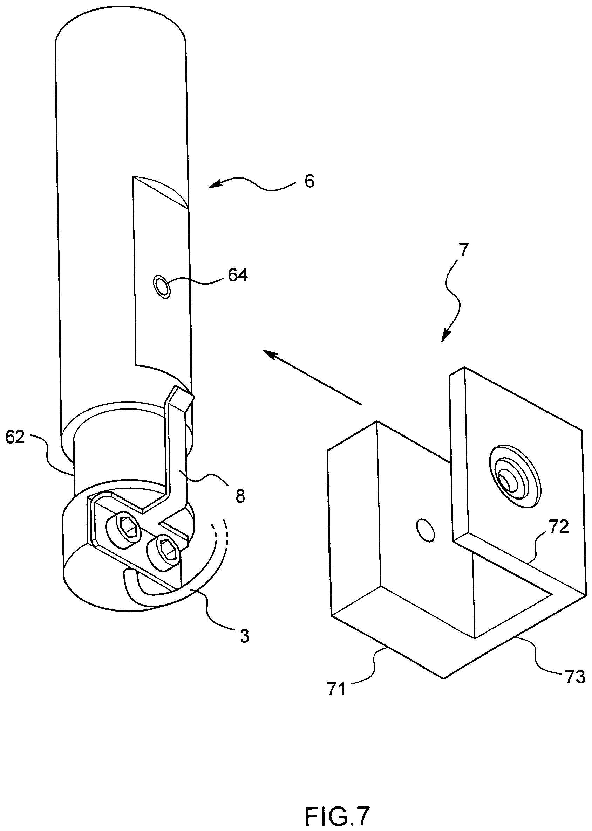

The optical measurement device 5 comprises, as shown in Fig. 1 and Fig. 3, a light emitting element 51 and a light sensitive element 52, each of which faces across the reaction cell 2. The light irradiated from the light emitting element 51 passes inside of the reaction cell 2 and is received by the light sensitive element 52. If explained more concretely, light passing bores 63, 64 are arranged on the temperature adjusting block 6 to face each other and the light emitting element 51 and the light sensitive element 52 are arranged to front the light passing bores 63, 64 respectively. In addition, the light emitting element 51 and the light sensitive element 52 are mounted on the temperature adjusting block 6 through a mounting member 7. The mounting member 7 is, as shown in Fig. 7, generally in a channel shape comprising a pair of element holding plates 71, 72 each of which faces each other and holds the light emitting element 51 and light sensitive element 52 respectively, and a connecting plate 73 that connects one end of the element holding plate 71 and one end of the element holding plate 72. The element holding plates 71, 72 of the mounting member 7 pinch the temperature adjusting block 6 in a radial direction so as to be mounted.

Next, an operation of measurement using the concentration measuring mechanism 100 having the above arrangement will be explained. The operation is automatically conducted by a command from a control unit, not shown in drawings, unless otherwise described.

At a time when a measurement is initiated by a command from an operator, the sampling nozzle 1 locating at a home position moves to a position of the R2 reagent vessel (not shown in drawings) and sucks/collects the R2 reagent. At this time the R2 reagent is kept at a low temperature (about 15 °C). After the R2 reagent is sucked, the sampling nozzle 1 moves upward, proceeds to a process to clean an outer surface of the sampling nozzle 1 with a cleaning liquid and then returns to the position of the R2 reagent vessel.

Next, the sampling nozzle 1 moves to a position of a R1 reagent vessel (not shown in drawings) and sucks/collects the R1 reagent. At this time the R1 reagent is also kept at a low temperature (about 15°C). After the R1 reagent is sucked, the sampling nozzle 1 moves upward, proceeds to a process to clean the outer surface of the sampling nozzle 1 with a cleaning liquid and then returns to the position of the R1 reagent vessel.

Next, the sampling nozzle 1 moves to a position where the sample is set and sucks the blood sample (the whole blood sample) in a sample vessel (not shown in drawings) for the CRP measurement. Then the sampling nozzle 1 moves upward, proceeds to a process to clean the outer surface of the sampling nozzle 1 with a cleaning liquid and then returns to the position where the sample is set.

Next, the sampling nozzle 1 moves to a position above the reaction cell 2 and discharges the blood sample, R1 reagent and the R2 reagent collected inside the sampling nozzle 1 into the reaction cell 2.

Then, the cylinder 41 of the fixed volume injection unit 4 repeats a back and forth movement several times by a previously determined stroke. This agitates the blood sample, the R1 reagent and the R2 reagent by moving them between the reaction cell 2 and the tube 3. In the reaction cell 2, a hemolytic reaction proceeds in the blood sample, the R1 reagent and the R2 reagent, and an interfering substance is removed as well. At this time, since the reaction cell 2 and the tube 3 are kept at a high temperature (about 37 °C) by means of the temperature adjusting block 6, a process of agitation and a process of applying heat to the reagent or the reaction liquid can be conducted at once.

The sampling nozzle 1 is driven while a certain period (about 60 second) required for the hemolytic reaction, and CBC, WBC, Hgb, RBC, PLT or the like are measured. The data at this time is taken to the above-mentioned control unit (not shown in drawings).

Later, the sampling nozzle 1, after passing a cleaning process, moves to a position of a R3 reagent vessel (not shown in drawings) and sucks/collects the R3 reagent. Then the sampling nozzle 1 moves to a position above the reaction cell 2 and discharges the R3 reagent into the reaction cell 2.

After discharging the R3 reagent, the cylinder 41 of the fixed volume injection unit 4 moves back and forth several times by a predetermined strode so as to agitate the reaction liquid at a second time. At this time, since the reaction cell 2 and the tube 3 are kept at a high temperature (about 37 °C) by means of the temperature adjusting block 6, a process of agitation and a process of applying heat to the reagent or the reaction liquid can be conducted at once. The reaction liquid is returned to the reaction cell 2 by returning the cylinder 41 of the fixed volume injection unit 4 to the initial position at a time when the immune reaction is generated, and then the CRP measurement is conducted. The data at this time is taken to the above-mentioned control unit (not shown in drawings). After this process, the reaction cell 2 is cleaned by a diluted liquid. Then all of the measurement is completed.

The control unit calculates each measurement value such as the RBC (a number of the red blood cell) and a volume of the red blood cell (MCV) based on the data obtained by the CBC measurement, and obtains a CRP concentration in the whole blood from an analytical curve from which an absorbance change per hour is obtained by a blood serum (or a blood plasma) of a concentration that has been previously known.

Similar to the CBC measurement, since the CRP measurement uses the whole blood to which an anticoagulant is added as the specimen 3, a plasma component volume error generated because of the use of the whole blood has to be corrected. Then a hematocrit value (Hct) is obtained from the RBC (the number of the red blood cell) and the volume of the red blood cell (MCV) obtained by means of the CBC measurement, and the CRP concentration in the whole blood obtained by the CRP measurement is corrected by the following equation correction by the use of the hematocrit value so as to obtain the CRP concentration in the blood plasma.

More specifically, let the CRP concentration in the whole blood be A and the hematocrit value be B, the CRP concentration C in the blood plasma can be obtained by the following equation.

$$C = A \times 100 / (100 - B)$$

Each measurement value obtained by the control unit is stored in, for example, a memory and output to a display or a printer.

In accordance with this arrangement, since the optical measurement device 5 is arranged on the reaction cell 2 having an arrangement to stand vertically and its upper surface open so that air bubbles are difficult to reside, it is possible to largely reduce an adverse effect on the measurement accuracy from the air bubbles. In addition, since the optical measurement device 5 is arranged on the reaction cell 2, the arrangement can be simplified and downsized, eventually enabling to promote improvement of a performance of cleaning and reducing the cost.

Furthermore, since the reaction cell 2 and the tube 3 are kept at the high temperature (about 37°C) by means of the temperature adjusting block 6 and a process of agitation and a process of applying heat to the produced reaction liquid can be conducted at once, it is possible to shorten a time required for measurement by far. In addition, since the tube 3 is wound inside the circumferential groove 62, it is possible to secure compactness. The optical measurement device 5 detects the transmitted light by arranging the light emitting element 51 and the light sensitive element 52 to face each other. However, the light emitting element 51 may be arranged at right angle to the light sensitive element 52 so as to detect a scattered light. In addition, the tube may wind around the temperature adjusting block without the circumferential groove.

Next, further examples will be explained with reference to drawings.

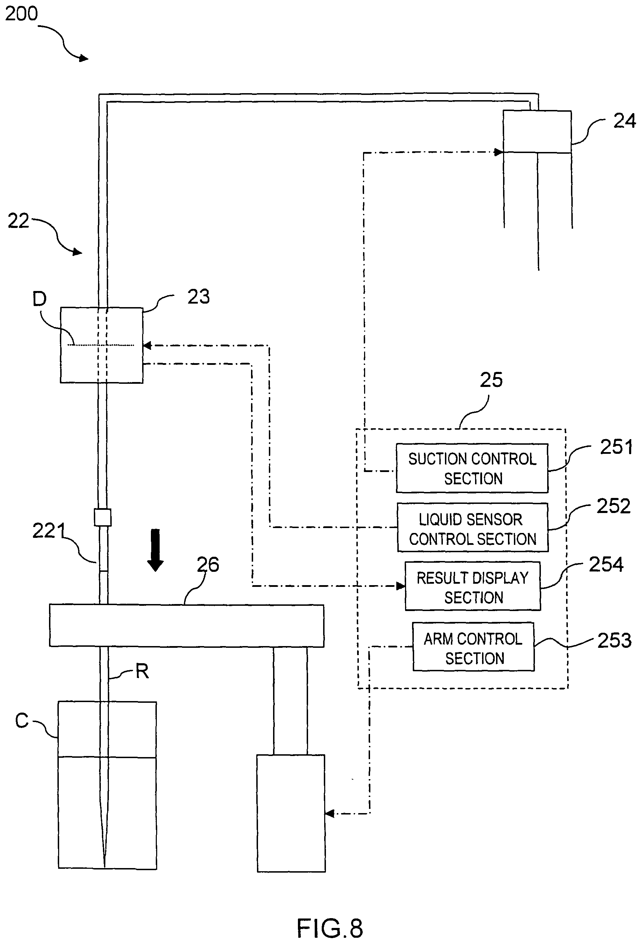

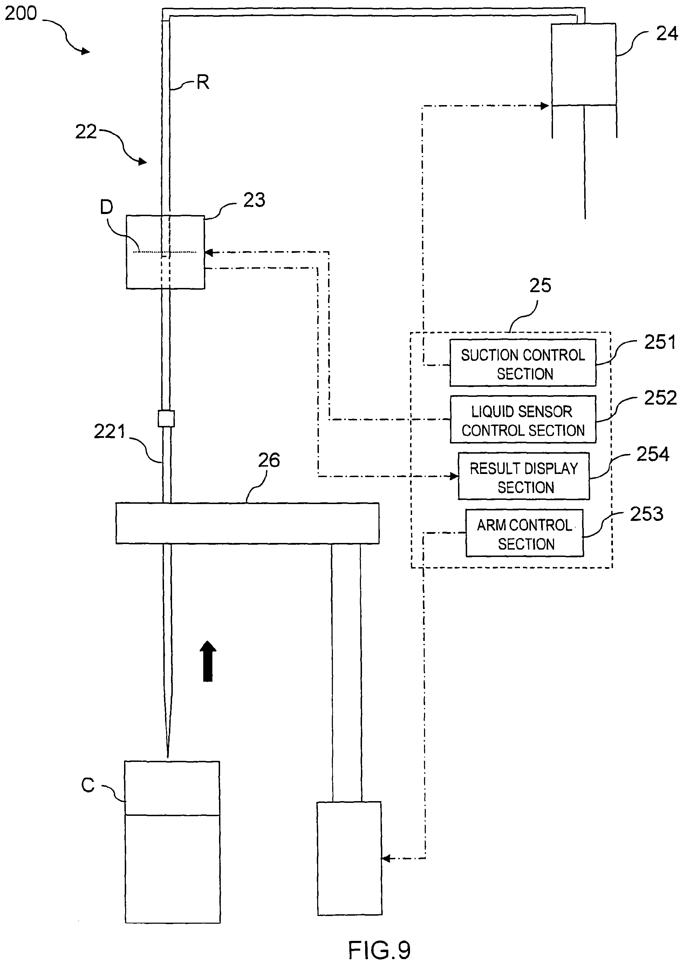

A liquid suction unit 200, as shown in Fig. 8 and Fig. 9, can comprise a flow channel 22 whose one end opens to form an opening end where a nozzle 221 is arranged, a liquid sensor 23 arranged on the flow channel 22, a suction mechanism 24 to suck a reagent as being an object to be measured into the flow channel 22, an arm 26 to hold the nozzle 221 and an information processing unit 25 to control the suction mechanism 24 or the like.

Each component will be explained. The flow channel 22 is of a tubular body made of a material that transmits the light and at the opening end of which a nozzle 221 is arranged, the reagent R is introduced into the flow channel 22 from a distal end opening section of the nozzle 221.

The liquid sensor 23 comprises a light source and a light detector, not shown in drawings. The liquid sensor 23 emits the light to the flow channel 22 at a sensing position D, detects the light intensity that transmits the flow channel 22 and detects whether or not the liquid is in the flow channel 22 based on a difference between the light emitting amount and the transmitting light intensity.

The suction mechanism 24 sucks the reagent R as being the object to be measured into the flow channel 22, and comprises, for example, a syringe or the like.

The arm 26 comprises a driving source such as a pulse motor or the like, and holds the nozzle 221 movably in a vertical direction. The arm 26 lowers the nozzle 221 to be inserted into a vessel C, as shown in Fig. 8, at a time of sucking the reagent R. The arm 26 raises the nozzle 221 to be pulled out from the vessel C, as shown in Fig. 9, at a time of sucking the air.

The information processing unit 25 is multipurpose or dedicated comprising a memory, an input device such as a keyboard and an output device such as a display, in addition to a CPU. The information processing unit 25 stores a predetermined program in the memory and produces functions as a suction control section 251, a liquid sensor control section 252, an arm control section 253 and a result display section 254 by cooperatively working the CPU and its peripheral devices according to the program.

The suction control section 251 controls the sucking mechanism 24 so as to suck the reagent R by a predetermined amount from the vessel C and then to suck the air by an amount necessary for a terminal end portion of the reagent R in the flow channel 22 to reach the sensing position D in the liquid sensor 23.

The liquid sensor control section 252 controls the liquid sensor 23 so as to detect whether or not the reagent R is at the sensing position D in the liquid sensor 23 after sucking the air by working cooperatively with the suction control section 251.

The arm control section 253 controls the arm 26 so as to lower the nozzle 221 to be inserted into the vessel C, as shown in Fig. 8, at a time of sucking the reagent R and so as to raise the nozzle 221 to be pulled out from the vessel C, as shown in Fig. 9, at a time of sucking the air by working cooperatively with the suck control section 251.

The result display section 254 outputs a result whether or not there is the reagent R at the sensing position D detected by the liquid sensor 23 as a character, an image or voice.

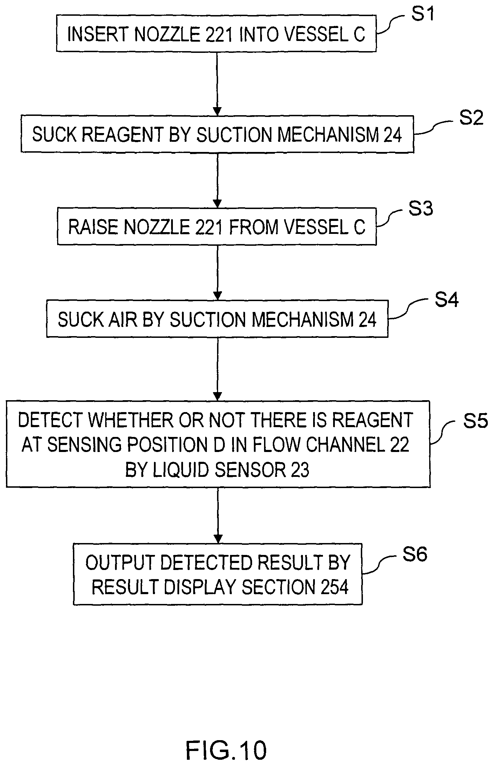

Next, processes to suck the reagent R from the vessel C by the use of the liquid suction unit 200 and to detect whether or not there is the reagent R will be explained with reference to a flow chart shown in Fig. 10.

First, the arm control section 253 transmits a control signal and the arm 26 that has received the control signal lowers the nozzle 221 so as to insert the nozzle 221 into the vessel C where the reagent R is housed (step S1).

Next, the suction control section 251 transmits a control signal and the sucking mechanism 24 that has received the control signal sucks the reagent R by a predetermined amount into the flow channel 22 from the nozzle 221 (step S2).

Then, the arm control section 253 transmits a control signal and the arm 26 that has received the control signal raises the nozzle 221 so as to pull up the nozzle 221 from the vessel C (step S3).

Next, the suction control section 251 transmits a control signal and the sucking mechanism 24 that has received the control signal sucks the air by a predetermined amount into the flow channel 22 from the nozzle 221 (step S4).

The liquid sensor control section 252 transmits a control signal, and the liquid sensor 23 that has received the control signal emits the light on the flow channel 22 from the light source, detects the light intensity that transmits the flow channel 22 and detects whether or not the reagent R is in the flow channel 22 at the sensing position D based on a difference between the light emitting amount and the transmitting light intensity (step S5).

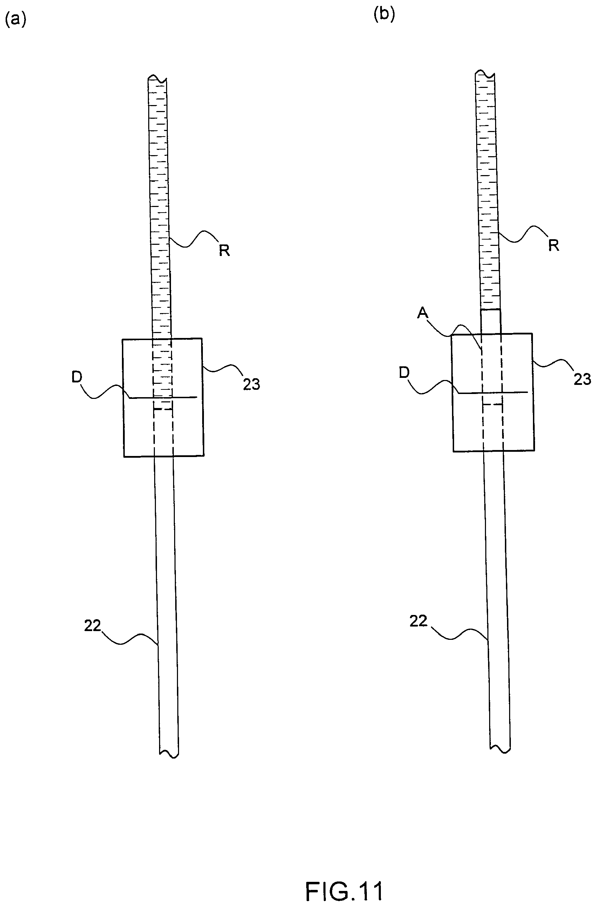

At this time, if the reagent R of more than or equal to the predetermined amount is in the vessel C, the terminal end portion of the reagent R sucked in the flow channel 22 locates at the sensing position D in the liquid sensor 23, as shown in Fig. 11(a), so that it is detected that the reagent R is sucked by the predetermined amount. Meanwhile, if the reagent R in the vessel C is less than the predetermined amount, the air A is sucked by an amount that the reagent R is short of. Then it is detected that the reagent R is sucked by an amount that is less than the predetermined amount because the air A exists at the sensing position D in the liquid sensor 23 as shown in Fig. 11(b).

Finally, the result display section 254 obtains a sensed result from the liquid sensor 23 and outputs it as a character, an image or a voice (step S6).

As a result, in accordance with the liquid suction unit 200 described herein, since the amount of the air that is sucked in succession to sucking the reagent R by the predetermined amount into the flow channel 22 from the vessel C is so set that the terminal end portion of the reagent R of the predetermined amount that has previously sucked into the flow channel 22 locates at the sensing position D in the liquid sensor 23, it is possible to accurately judge whether or not the reagent R is in the vessel C or to judge whether or not the reagent R is sampled by an intended amount without being affected by a viscosity or a density of the reagent R.

It is possible to deal with a case of changing an amount of the reagent to be sucked if a setting amount of the air to be sucked is changed by adjusting a position of the sensing position D (a position where the liquid sensor 23 is set) in the flow channel 22 or a stroke amount of the sucking mechanism 24.

In addition, regarding to a kit comprising several kinds of the reagent, it is possible to know a time to exchange the kit by sensing whether or not there is the reagent that is consumed first by means of the liquid suction unit 200. It is also possible to detect mixture of air bubbles or to calculate a sucked amount of the reagent if a setting of the liquid sensor control section 252 is changed, one stroke of the suction mechanism 24 at a time of sucking the air after the reagent is sucked is divided into "N" times and the liquid sensor 23 is operated to detect whether or not there is the reagent R at the sensing position D in the flow channel 22 each time.

The liquid sensor 23 may also be an electromagnetic sensor or an ultrasonic sensor as far as it can identify whether or not there is the liquid in the flow channel 22. In this case, the liquid sensor 23 may not be fixed to the flow channel 22 and a material of a tubular body constituting the flow channel 22 may not be limited to a material having an optical transparency.

## EXPLANATION OF THE CODE

| | |
|---|---|
| 2 | reaction cell |
| 21 | insertion bore |
| 3 | tube |
| 4 | fixed volume injection unit |
| 5 | optical measurement device |
| 51 | light emitting element |
| 52 | light sensing element |
| 6 | temperature adjusting block |
| 62 | circumferential groove |
| 63, 64 | optical transmitting bore |
| 7 | mounting member |
| 71, 72 | element holding plate |
| 73 | connecting plate |
| 9 | cover for shielding light |
| 200 | liquid suction unit |
| 22 | flow channel |
| 23 | liquid sensor |
| 24 | suction mechanism |
| 251 | suction control section |
| 252 | liquid sensor control section |
| 253 | arm control section |

## Claims

1. A body fluid sample analyzer (100) that is configured to analyze a body fluid sample based on a light transmission characteristic of a reaction liquid produced by reaction of the body fluid sample and a reagent, comprising:

   a reaction cell (2) that stands vertically and that has an insertion bore (21) for the body fluid sample and the reagent on its upper surface,
   a discharge/suction apparatus (4) that is connected to a bottom part of the reaction cell (2) through a tube (3) and that is configured to reciprocate and to agitate the body fluid sample and the reagent between the reaction cell (2) and the tube (3) by repeating a discharging and sucking movement,
   an optical measurement device (5) that is configured to measure a light transmission characteristic of the reaction liquid produced by agitating the body fluid sample and the reagent,
   wherein the optical measurement device (5) is arranged on the reaction cell (2), and
   a temperature adjusting block (6) that is configured to adjust a temperature and houses the reaction cell (2) in its inside,
   wherein a portion of the tube (3) the body fluid sample and the reagent enter due to the reciprocating movement in the tube (3) extending from the reaction cell (2) is wound around an outer surface of the temperature adjusting block (6).

2. The body fluid sample analyzer (100) described in claim 1,
   further comprising a cover (9) for shielding the light arranged in an openable and closable state on the insertion bore (21).

3. The body fluid sample analyzer (100) described in claim 1 or 2,
   wherein a part or all of the reaction cell (2) is made of a transparent wall,
   wherein a light emitting element (51) and a light sensing element (52) constituting the optical measurement device (5) are arranged at portions facing the transparent wall respectively, and
   wherein the light emitted from the light emitting element (51) can be received by the light sensing element (52) through the reaction cell (2).

4. The body fluid sample analyzer (100) described in claim 1,
   wherein a circumferential groove (62) whose depth is equal to an outer diameter of the tube (3) or deeper than the outer diameter is arranged on the outer surface of the temperature adjusting block (6) and
   wherein the tube (3)P is held by the circumferential groove (62) by winding the tube (3) around the circumferential groove (62).

5. The body fluid sample analyzer (100) described in claim 4,
   wherein optical transmitting bores (63, 64) are arranged at portions facing each other on the temperature adjusting block (6),
   wherein a mounting member (7) for fixing the light emitting element (51) and the light sensing element (52) on portions each of which faces the optical transmitting bore (63, 64) of the temperature adjusting block (6) is arranged,
   wherein the mounting member (7) comprises a pair of element holding plates (71, 72) each of which holds the light emitting element (51) and the light sensing element (52) respectively and each of which faces each other and a connecting plate (73) that connects one end of the element holding plate (71, 72) and one end of the other element holding plate (72, 71), and
wherein the mounting member (7) is so arranged to pinch the temperature adjusting block (6) between the element holding plates (71, 72).

## Patentansprüche

1. Analysegerät (100) für Körperflüssigkeitsproben, das dafür eingerichtet ist, eine Körperflüssigkeitsprobe basierend auf einer Lichttransmissionseigenschaft einer Reaktionsflüssigkeit zu analysieren, die durch eine Reaktion der Körperflüssigkeitsprobe und eines Reagenzes erzeugt wird, umfassend:

   eine Reaktionszelle (2), die senkrecht steht und die auf ihrer oberen Oberfläche eine Einführungsbohrung (21) für die Körperflüssigkeitsprobe und das Reagenz aufweist,
   eine Ausstoß- bzw. Druck/Saugvorrichtung (4), die durch ein Rohr (3) mit einem Bodenteil der Reaktionszelle (2) verbunden ist und die dafür eingerichtet ist, die Körperflüssigkeitsprobe und das Reagenz zwischen der Reaktionszelle (2) und dem Rohr (3) durch Wiederholen einer Ausstoß- bzw. Druck- und Saugbewegung hin und her zu bewegen und zu verrühren,
   eine optische Messvorrichtung (5), die dafür eingerichtet ist, eine Lichttransmissionseigenschaft der Reaktionsflüssigkeit zu messen, die durch Verrühren der Körperflüssigkeitsprobe und des Reagenzes erzeugt wird,
   wobei die optische Messvorrichtung (5) auf der Reaktionszelle (2) angeordnet ist, und
   einen Temperatureinstellblock (6), der dafür eingerichtet ist, eine Temperatur einzustellen, und in seinem Inneren die Reaktionszelle (2) aufnimmt, wobei ein Abschnitt des Rohres (3), wo die Körperflüssigkeitsprobe und das Reagenz aufgrund der hin und hergehenden Bewegung eintreten, in dem von der Reaktionszelle (2) ausgehenden Rohr (3) um eine äußere Oberfläche des Temperatureinstellblocks (6) gewunden ist.

2. Analysegerät (100) für Körperflüssigkeitsproben nach Anspruch 1,
   ferner umfassend eine Abdeckung (9) zum Abschirmen des Lichts, die in einem öffenbaren und schließbaren Zustand auf der Einführungsbohrung (21) angeordnet ist.

3. Analysegerät (100) für Körperflüssigkeitsproben nach Anspruch 1 oder 2,
   wobei ein Teil der oder die ganze Reaktionszelle (2) aus einer transparenten Wand hergestellt ist,
   wobei ein lichtemittierendes Element (51) und ein lichtabfühlendes Element (52), die die optische Messvorrichtung (5) bilden, jeweils bei Abschnitten der transparenten Wand gegenüberliegend angeordnet sind, und
   wobei das von dem lichtemittierenden Element (51) emittierte Licht von dem lichtabfühlenden Element (52) durch die Reaktionszelle (2) empfangen werden kann.

4. Analysegerät (100) für Körperflüssigkeitsproben nach Anspruch 1,
   wobei eine umlaufende Vertiefung (62), deren Tiefe gleich einem Außendurchmesser des Rohres (3) oder tiefer als der Außendurchmesser ist, auf der äußeren Oberfläche des Temperatureinstellblocks (6) angeordnet ist, und
   wobei das Rohr (3) durch die umlaufende Vertiefung (62) gehalten wird, indem sich das Rohr (3) um die umlaufende Rille (62) windet.

5. Analysegerät (100) für Körperflüssigkeitsproben nach Anspruch 4,
   wobei optisch durchlässige Bohrungen (63, 64) bei einander gegenüberliegenden Abschnitten auf dem Temperatureinstellblock (6) angeordnet sind,
   wobei ein Montagelement (7) zum Fixieren des lichtemittierenden Elements (51) und des lichtabfühlenden Elements (52) auf Abschnitten, die jeweils der optisch durchlässigen Bohrung (63, 64) des Temperatureinstellblocks (6) gegenüberliegen, angeordnet ist,
   wobei das Montageelement (7) ein Paar Elementhalteplatten (71, 72), die jeweils das lichtemittierende Element (51) bzw. das lichtabfühlende Element (52) halten und die jeweils einander gegenüberliegen, und eine verbindende Platte (73) umfasst, die ein Ende der Elementhalteplatte (71, 72) und ein Ende der anderen Elementhalteplatte (72, 71) verbindet, und
   wobei das Montagelement (7) so angeordnet ist, dass es den Temperatureinstellblock (6) zwischen den Elementhalteplatten (71, 72) einklemmt.

## Revendications

1. Analyseur d'échantillon de fluide corporel (100) qui est conçu pour analyser un échantillon de fluide corporel à partir d'une caractéristique de transmission de lumière d'un liquide de réaction produit par la réaction dudit échantillon de fluide corporel et d'un réactif, comprenant :

   une cellule de réaction (2) qui est posée à la verticale et qui présente sur sa surface supérieure un orifice d'introduction (21) pour l'échantillon de fluide corporel et le réactif,
   un appareil de refoulement/aspiration (4) qui est relié à une partie inférieure de la cellule de réaction (2) par un tube (3), et qui est conçu pour soumettre à un mouvement alternatif et pour agiter l'échantillon de fluide corporel et le réactif entre la cellule de réaction (2) et le tube (3), en répétant un mouvement de refoulement et d'aspiration,

un dispositif de mesure optique (5) qui est conçu pour mesurer une caractéristique de transmission de lumière du liquide de réaction produit par l'agitation de l'échantillon de fluide corporel et du réactif,

le dispositif de mesure optique (5) étant disposé sur la cellule de réaction (2), et

un bloc de réglage de température (6) qui est conçu pour régler une température et qui renferme la cellule de réaction (2),

une partie du tube (3) où l'échantillon de fluide corporel et le réactif entrent en raison du mouvement alternatif dans le tube (3) qui s'étend à partir de la cellule de réaction (2) étant enroulée autour d'une surface extérieure du bloc de réglage de température (6).

2. Analyseur d'échantillon de fluide corporel (100) décrit dans la revendication 1, comprenant également un couvercle (9) pour protéger de la lumière, qui est disposé sur l'orifice d'insertion (21) de manière à pouvoir être ouvert et fermé.

3. Analyseur d'échantillon de fluide corporel (100) décrit dans la revendication 1 ou 2,
dans lequel tout ou partie de la cellule de réaction se compose d'une paroi transparente,
un élément émetteur de lumière (51) et un élément capteur de lumière (52) qui constituent le dispositif de mesure optique (5) sont disposés sur des parties qui font face à la paroi transparente, respectivement, et
la lumière émise à partir de l'élément émetteur de lumière (51) peut être reçue par l'élément capteur de lumière (52) à travers la cellule de réaction (2).

4. Analyseur d'échantillon de fluide corporel (100) décrit dans la revendication 1,
dans lequel une rainure circonférentielle (62) dont la profondeur est égale à un diamètre du tube (3) ou inférieure à ce diamètre extérieur est disposée sur la surface extérieure du bloc de réglage de température (6), et
le tube (3) est retenu par la rainure circonférentielle (62) en étant enroulé autour de celle-ci.

5. Analyseur d'échantillon de fluide corporel (100) décrit dans la revendication 4,
dans lequel des orifices de transmission optique (63, 64) sont disposés sur des parties qui se font face, sur le bloc de réglage de température (6),
il est prévu un élément de montage (7) pour fixer l'élément émetteur de lumière (51) et l'élément capteur de lumière (52) sur des parties qui font face chacune à l'orifice de transmission optique (63, 64) du bloc de réglage de température (6),
l'élément de montage (7) comprend deux plaques de retenue d'élément (71, 72) qui retiennent chacune l'élément émetteur de lumière (51) et l'élément capteur de lumière (52), respectivement, et qui se font face, et une plaque de liaison (73) qui relie une extrémité de la plaque de retenue d'élément (71, 72) et une extrémité de l'autre plaque de retenue d'élément (72, 71), et
l'élément de montage (7) est conçu pour serrer le bloc de réglage de température (6) entre les plaques de retenue d'élément (71, 72).

FIG.1

FIG.2

FIG.3

FIG.4

FIG.5

FIG.6

FIG.7

200

22

24

D

23

221

26

R

C

25

SUCTION CONTROL
SECTION — 251

LIQUID SENSOR
CONTROL SECTION — 252

RESULT DISPLAY
SECTION — 254

ARM CONTROL
SECTION — 253

FIG.8

200

R

22

D

23

221

26

C

25

SUCTION CONTROL SECTION — 251

LIQUID SENSOR CONTROL SECTION — 252

RESULT DISPLAY SECTION — 254

ARM CONTROL SECTION — 253

24

FIG.9

INSERT NOZZLE 221 INTO VESSEL C — S1

SUCK REAGENT BY SUCTION MECHANISM 24 — S2

RAISE NOZZLE 221 FROM VESSEL C — S3

SUCK AIR BY SUCTION MECHANISM 24 — S4

DETECT WHETHER OR NOT THERE IS REAGENT AT SENSING POSITION D IN FLOW CHANNEL 22 BY LIQUID SENSOR 23 — S5

OUTPUT DETECTED RESULT BY RESULT DISPLAY SECTION 254 — S6

FIG.10

(a)

(b)

R

R

A

D

D

23

23

22

22

## FIG.11

## REFERENCES CITED IN THE DESCRIPTION

**Patent documents cited in the description**

- JP 11295303 A
- JP 2004333439 A
- US 4265544 A
- US 20080025872 A1
- JP 2008032624 A